# EUROPEAN PATENT SPECIFICATION

(11) **EP 2 515 472 B1**
(45) Date of publication and mention of the grant of the patent: **21.03.2018**
(21) Application number: 10791358.4
(22) Date of filing: 20.05.2010
(51) Int. Cl.: H04L 9/32, G06F 21/32

(54) **IMPLEMENTING METHOD OF CARD SIMULATION APPLICATION OF NEAR-FIELD COMMUNICATION (NFC) MOBILE TERMINAL AND NFC MOBILE TERMINAL THEREOF**
IMPLEMENTIERUNGSVERFAHREN EINER KARTENSIMULATIONSANWENDUNG FÜR EIN MOBILES ENDGERÄT ZUR NAHFELDKOMMUNIKATION (NFC) UND MOBILES NFC-ENDGERÄT
PROCÉDÉ D'IMPLÉMENTATION D'UNE APPLICATION DE SIMULATION DE CARTE D'UN TERMINAL MOBILE À COMMUNICATION EN CHAMP PROCHE (NFC) ET TERMINAL MOBILE NFC AFFÉRENT

(30) Priority: 17.12.2009 CN 200910252504
(43) Date of publication of application: 24.10.2012
(73) Proprietor: ZTE Corporation, Shenzhen, Guangdong 518057 (CN)
(72) Inventor: ZHOU, Xiaolin, Shenzhen Guangdong 518057 (CN); WANG, Zongyang, Shenzhen Guangdong 518057 (CN)
(74) Representative: Schröer, Gernot H.
(86) International application number: PCT/CN2010/073015
(87) International publication number: WO 2010/148852

(56) References cited:
- EP-A1- 1 758 053
- CN-A- 1 462 410
- CN-A- 101 393 666
- CN-A- 101 430 808
- CN-A- 101 546 401
- US-A1- 2009 307 139
- A Kanade ET AL: "T A Fingerprint Authentication System Based on Mobile Phone *", LNCS, 1 January 2005 (2005-01-01), pages 151-159, XP055166200, Retrieved from the Internet: URL:http://rd.springer.com/content/pdf/10. 1007/11527923_16.pdf [retrieved on 2015-01-30]

## Description

### Technical Field

The present document relates to the near field communication (NFC) technology in the mobile communication field, and particularly, to a method for implementing the card emulation application of a near field communication mobile terminal and an NFC mobile terminal.

### Background of the Related Art

Near field communication (NFC) is evolved from the integration of contactless radio frequency identification and interconnection and intercommunication technology, and the functions of induction card reader, induction card and point-to-point are integrated in a single chip. The NFC technology is also to carry out identification and data exchange with compatible devices within short distance by way of electro-magnetic induction coupling of the radio frequency portion in the frequency spectrum. Integrating an NFC chip into a mobile phone is just an NFC mobile phone, and the NFC mobile phone has the function of short distance wireless communication, and can carry out wireless connection with compatible devices and achieve a plurality of functions such as electronic payment, tag reading and data download. Currently, the NFC application is tried out in countries such as Japan, South Korea, Europe and America worldly and applied in fields such as micro payment, ticket system and tag reading.

The application of the NFC technology in the mobile terminal also brings consumption risk to the user of the mobile terminal while bringing convenience to the daily life of the user of the mobile terminal. For example, in case of the NFC mobile terminal being lost or stolen, anyone can use this NFC mobile terminal to carry out card consumption. Although others who steal the NFC mobile terminal can be prevented to use this NFC mobile terminal to carry out card consumption by reporting the loss of the NFC mobile terminal and other ways, due to various reasons, the procedures such as reporting the loss may not be done promptly, thus, it will still bring loss to the legal user of the NFC mobile terminal. It can be seen that the existing technology for the card consumption with the NFC mobile terminal has relatively large potential safety hazard.

Relevant technologies are also known from Kanade et al: "A fingerprint authentication system based on mobile LNCS" 1 January 2005, pages 151-159, XP055166200, retrieved from the internet:
URL:http://rd.springer.com/content/pdf/10.1007/11527923_16.pdf; and CN 101430808A (WANG WEI) 13 May 2009.

### Summary of the Invention

The embodiments of the present document provide a method for implementing the card emulation application of an NFC mobile terminal and a device thereof, so as to reduce the potential safety hazard of the card emulation application of the existing NFC mobile terminal.

The features of the method according to the present document are defined in the independent claims.

Also provided is a method for implementing card emulation application of a near field communication (NFC) mobile terminal, comprising:
prestoring fingerprint information about an authorized user of the NFC mobile terminal;
acquiring inputted fingerprint information and comparing the inputted fingerprint information with the prestored fingerprint information about the authorized user of the NFC mobile terminal; and
if the inputted fingerprint information matches the fingerprint information about the authorized user, then allowing to execute a processing operation of the card emulation application of the NFC mobile terminal;
if the inputted fingerprint information fails to match the fingerprint information about the authorized user, then rejecting to execute the processing operation of the card emulation application of the NFC mobile terminal.

In the step of comparing the inputted fingerprint information with the prestored fingerprint information about the authorized user of the NFC mobile terminal, the fingerprint information about the authorized user is fingerprint feature information about the authorized user;
after the step of acquiring the inputted fingerprint information, the method further comprises: extracting the fingerprint feature information from the inputted fingerprint information;
the step of comparing the inputted fingerprint information with the prestored fingerprint information about the authorized user of the NFC mobile terminal comprises: comparing the fingerprint feature information extracted from the inputted fingerprint information with the fingerprint feature information about the authorized user.

In the step of comparing the inputted fingerprint information with the prestored fingerprint information about the authorized user of the NFC mobile terminal, if the following condition is met, then the inputted fingerprint information matches the fingerprint information about the authorized user:
the fingerprint feature information extracted from the inputted fingerprint information is consistent with the fingerprint feature information about the authorized user; or
a similarity between the fingerprint feature information extracted from the inputted fingerprint information and the fingerprint feature information about the authorized user is greater than a preset threshold.

The step of prestoring fingerprint information about the authorized user of the NFC mobile terminal comprises:
receiving a command inputted by a user and comparing that command with a command preset by the authorized user;
when the inputted command is consistent with the command preset by the authorized user, prompt the user to input a fingerprint; and acquiring the fingerprint information inputted by the user, extracting the fingerprint feature information therefrom, and storing the extracted fingerprint feature information.

Before the step of acquiring the inputted fingerprint information, the method further comprises: starting up a fingerprint identification mode of the NFC mobile terminal according to a detected radio frequency signal emitted by a card reading device;
after the step of starting up the fingerprint identification mode of the NFC mobile terminal, the method further comprises: when the NFC mobile terminal fails to detect the radio frequency signal of the card reading device, closing the fingerprint identification mode of the NFC mobile terminal.

Also provided is a near field communication (NFC) mobile terminal, comprising:
a fingerprint authentication system configured to: prestoring fingerprint information about an authorized user of the NFC mobile terminal; and
acquiring inputted fingerprint information and comparing the inputted fingerprint information with the prestored fingerprint information about the authorized user of the NFC mobile terminal I; if the inputted fingerprint information matches the fingerprint information about the authorized user, then send to an NFC card swiping function processing module an instruction that a processing operation of a card emulation application of the NFC mobile terminal is allowed to execute; and if the inputted fingerprint information fails to match the fingerprint information about the authorized user, then send to the NFC card swiping function processing module an instruction that the processing operation of the card emulation application of the NFC mobile terminal is rejected to execute; and
the NFC card swiping function processing module configured to: if receiving the instruction that the processing operation of the card emulation application of the NFC mobile terminal is allowed to execute sent from the fingerprint authentication system, then execute the processing operation of the card emulation application of the NFC mobile terminal; and if receiving the instruction that the processing operation of the card emulation application of the NFC mobile terminal is rejected to execute sent from the fingerprint authentication system, then reject to execute the processing operation of the card emulation application of the NFC mobile terminal.

The fingerprint authentication system comprises:
a fingerprint information storage unit configured to prestore the fingerprint feature information about the authorized user of the NFC mobile terminal;
a fingerprint sensor configured to sense the inputted fingerprint information and extract the fingerprint feature information from the inputted fingerprint information; and
a fingerprint identification module configured to: compare the fingerprint feature information extracted by the fingerprint sensor with the fingerprint information stored by the fingerprint information storage unit, if the inputted fingerprint information matches the fingerprint information about the authorized user, then send the instruction that the processing operation of the card emulation application of the NFC mobile terminal is allowed to execute to the NFC card swiping function processing module; and if the inputted fingerprint information fails to match the fingerprint information about the authorized user, then send the instruction that the processing operation of the card emulation application of the NFC mobile terminal is rejected to execute to the NFC card swiping function processing module.

The fingerprint identification module is configured to compare whether the inputted fingerprint information matches the fingerprint information about the authorized user according to the following manners:
the fingerprint identification module compares whether the fingerprint feature information extracted from the inputted fingerprint information is consistent with the fingerprint information about the authorized user, if yes, then they match; or
the fingerprint identification module compares whether a similarity between the fingerprint feature information extracted from the inputted fingerprint information and the fingerprint information about the authorized user is greater than a preset threshold, if yes, then they match.

The fingerprint authentication system is configured to prestore the fingerprint information about the authorized user of the NFC mobile terminal according to the following manner: receive a command inputted by a user and compare that command with a command preset by the authorized user; when the inputted command is consistent with the command preset by the authorized user, prompt the user to input a fingerprint; and acquire the fingerprint information inputted by the user, extract the fingerprint feature information therefrom, and store the extracted fingerprint feature information.

The fingerprint authentication system is further configured to: start up a fingerprint identification mode according to a detected radio frequency signal emitted by a card reading device; and when the NFC mobile terminal fails to detect the radio frequency signal of the card reading device, close the fingerprint identification mode.

The NFC mobile terminal further comprises:
a radio frequency antenna module configured to: when receiving the radio frequency signal emitted by the card reading device, supply power to the fingerprint authentication system with energy of the received radio frequency signal.

Also provided is a near field communication (NFC) mobile terminal, comprising:
a fingerprint authentication system configured to: prestore fingerprint information about an authorized user of the NFC mobile terminal; acquire inputted fingerprint information, compare the inputted fingerprint information with the prestored fingerprint information about the authorized user of the NFC mobile terminal, and send a comparison result to an NFC card swiping function processing module; and
the NFC card swiping function processing module configured to: when the comparison result of the fingerprint authentication system is that the inputted fingerprint information matches the fingerprint information about the authorized user, then execute a processing operation of a card emulation application of the NFC mobile terminal; and when the comparison result of the fingerprint authentication system is that the inputted fingerprint information fails to match the fingerprint information about the authorized user, then reject to execute the processing operation of the card emulation application of the NFC mobile terminal.

The fingerprint authentication system comprises:
a fingerprint information storage unit configured to prestore the fingerprint feature information about the authorized user of the NFC mobile terminal;
a fingerprint sensor configured to sense the inputted fingerprint information and extract the fingerprint feature information from the inputted fingerprint information; and
a fingerprint identification module configured to: compare the fingerprint feature information extracted by the finger sensor with the fingerprint information stored by the fingerprint information storage unit and send the comparison result to the NFC card swiping function processing module.

The fingerprint authentication system is further configured to: start up a fingerprint identification mode according to a detected radio frequency signal emitted by a card reading device; and when the NFC mobile terminal fails to detect the radio frequency signal of the card reading device, close the fingerprint identification mode.

The NFC mobile terminal further comprises:
a radio frequency antenna module configured to: when receiving the radio frequency signal emitted by the card reading device, supply power to the fingerprint authentication system with the energy of the received radio frequency signal.

In the above embodiments of the present document, before executing the processing operation of the card emulation application of the NFC mobile terminal, the inputted fingerprint information is acquired, the inputted fingerprint information is compared with the prestored fingerprint information about the authorized user of the NFC mobile terminal so as to judge whether the inputted fingerprint matches the fingerprint information of the authorized user, and the card emulation application of the NFC mobile terminal is allowed to be used for card consumption only when it is judged that they match, therefore, in combination with the fingerprint identification technology, user identity authentication is carried out on the processing operation behavior of the user using the card emulation application of the NFC mobile terminal, thus improving the safety of the card emulation application of the NFC mobile terminal.

### Brief Description of Drawings

FIG. 1 is a structural schematic diagram of an NFC mobile terminal provided by the embodiments of the present document;
FIG. 2 is a schematic flowchart of storing the fingerprint feature information about an authorized user provided by the embodiments of the present document; and
FIG. 3 is a schematic flowchart of card consumption based on fingerprint identification provided by the embodiments of the present document.

### Preferred Embodiments of the Present Invention

With respect to the problems in the related art, the embodiments of the present document provide a method for applying the fingerprint identification technology in the NFC mobile terminal, so that the consumption safety can be improved while the legal owner or legal user of the NFC mobile terminal can enjoy the convenience and rapidness brought about by card consumption, preventing the unauthorized user from using this NFC mobile terminal to carry out card consumption.

Hereinafter, the embodiments of the present document will be described in detail in conjunction with the accompanying drawings.

Considering that the fingerprint identification technology has already become much mature, the embodiments of the present document apply the fingerprint identification technology in the NFC mobile terminal and identify the legality of the user who is using the NFC mobile terminal by way of the fingerprint identification technology, so as to improve the safety when the NFC mobile terminal is used for card consumption.

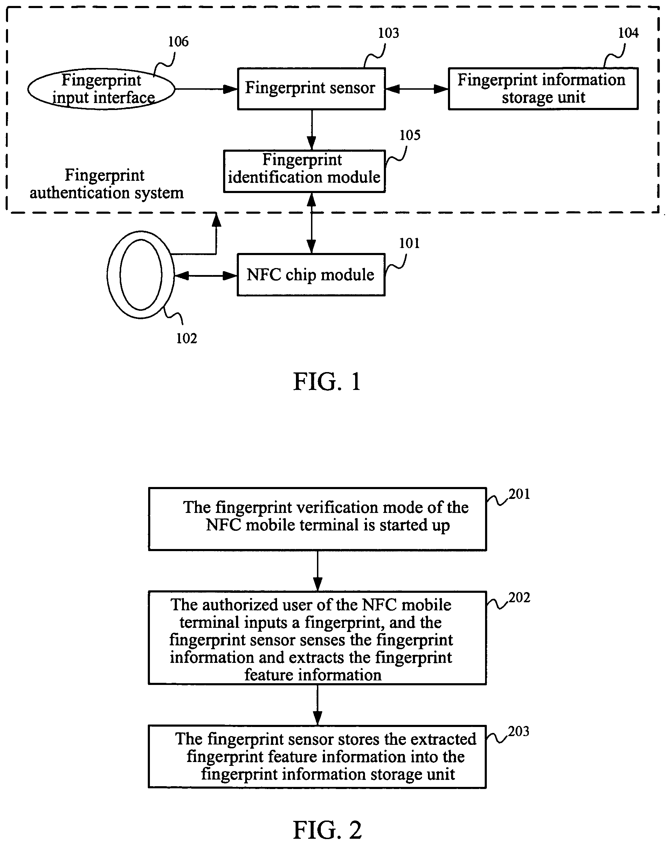

As shown in FIG. 1, in addition to including the conventional modules included in the conventional NFC mobile terminal, such as an NFC chip module 101 and a radio frequency antenna module 102, the NFC mobile terminal provided by the embodiments of the present document further includes a fingerprint sensor 103, a fingerprint information storage unit 104, and a fingerprint identification module 105. In this case, the fingerprint sensor 103, fingerprint information storage unit 104, and fingerprint identification module 105 are newly added modules as compared to the conventional NFC mobile terminal and constitute a fingerprint authentication system in the NFC mobile terminal; and the NFC chip module 101 and radio frequency antenna module 102 can be obtained by modification on the basis of the existing modules of the conventional NFC mobile terminal.

The fingerprint information storage unit 104 is configured to store the fingerprint feature information about the authorized user of the NFC mobile terminal; and
The fingerprint sensor 103 is configured to sense the fingerprint information inputted by a user and extract the feature information of the inputted fingerprint. This fingerprint sensor 103 can sense fingerprint information inputted by the user via a fingerprint input interface 106 provided by the fingerprint authentication system of the NFC mobile terminal.

The fingerprint identification module 105 is configured to: compare the fingerprint feature information extracted by the fingerprint sensor 103 with the fingerprint feature information about the authorized user stored in the fingerprint information storage unit 104, check whether the fingerprint feature information about the current user (i.e. it refers to the user who is currently inputting the fingerprint, the same as below) is stored in the fingerprint information storage unit 104, and controls the behavior of the current user using this NFC mobile terminal to carry out card consumption, for example it includes: if the fingerprint feature information about the current user is stored in the fingerprint information storage unit 104, then the current user is allowed to use the NFC mobile terminal to carry out card consumption, otherwise, the current user is not allowed to use the NFC mobile terminal to carry out card consumption.

The NFC chip module 101 is also the NFC card swiping function processing module, and the NFC chip module 101 is configured to: carry out card consumption with a POS by way of radio frequency signals in case of the current user being legal;
the radio frequency antenna module 102 is configured to: carry out radio frequency signal interaction with the POS in case of the NFC chip module 101 starting up the card swiping function, in addition, the radio frequency antenna module 102 is also responsible for providing operating power supply voltage to the fingerprint authentication system.

In another embodiment of the present document, also provided is an NFC mobile terminal, comprising:
a fingerprint authentication system configured to: prestore the fingerprint information about an authorized user of the NFC mobile terminal; acquire the inputted fingerprint information, compare the inputted fingerprint information with the prestored fingerprint information about the authorized user of the NFC mobile terminal, and
send the comparison result to an NFC card swiping function processing module; and
the NFC card swiping function processing module configured to: when the comparison result of the fingerprint authentication system is that the inputted fingerprint information matches the fingerprint information about the authorized user, then execute a processing operation of the card emulation application of the NFC mobile terminal; and when the comparison result of the fingerprint authentication system is that the inputted fingerprint information fails to match the fingerprint information about the authorized user, then reject to execute a processing operation of the card emulation application of the NFC mobile terminal.

The fingerprint authentication system comprises:
a fingerprint information storage unit configured to prestore the fingerprint feature information about the authorized user of the NFC mobile terminal;
a fingerprint sensor configured to sense the inputted fingerprint information and extract the fingerprint feature information from the inputted fingerprint information; and
a fingerprint identification module configured to: compare the fingerprint feature information extracted by the finger sensor with the fingerprint information stored by the fingerprint information storage unit and send the comparison result to the NFC card swiping function processing module.

The fingerprint authentication system is further configured to: start up the fingerprint identification mode according to the detected radio frequency signal emitted by a card reading device; and when the NFC mobile terminal fails to detect the radio frequency signal of the card reading device, close the fingerprint identification mode.

The NFC mobile terminal further comprises:
a radio frequency antenna module configured to: when receiving the radio frequency signal emitted by the card reading device, supply power to the fingerprint authentication system with the energy of the received radio frequency signal.

As shown in FIG. 2, the process of storing the fingerprint feature information about the authorized user in the fingerprint information storage unit 104 includes the following steps.

In step 201, the fingerprint authentication mode of the NFC mobile terminal is started up.

After the fingerprint authentication mode is started up, the user can select the interface to input the fingerprint of the authorized user, and the fingerprint authentication system of the NFC mobile terminal provides this fingerprint input interface for the authorized user and can prompt the user to input a fingerprint.

In step 202, after the authorized user of the NFC mobile terminal has input fingerprint information via the fingerprint input interface, the fingerprint sensor 103 senses the fingerprint information inputted by the user and extract the fingerprint feature information about the user form the sensed fingerprint information.

In step 203, the fingerprint sensor 103 stores the extracted fingerprint feature information into the fingerprint information storage unit 104.

In the above flow, for improving safety, the fingerprint authentication system can prestore the command preset by the authorized user, and before the user inputs the fingerprint via the authorized user fingerprint input interface, the user can be required to input the command, and the fingerprint authentication system prompts and allows the user to input the fingerprint only when the command inputted by the user is consistent with the prestored command set by the authorized user, and subsequently stores the feature information about the inputted fingerprint into the fingerprint information storage unit.

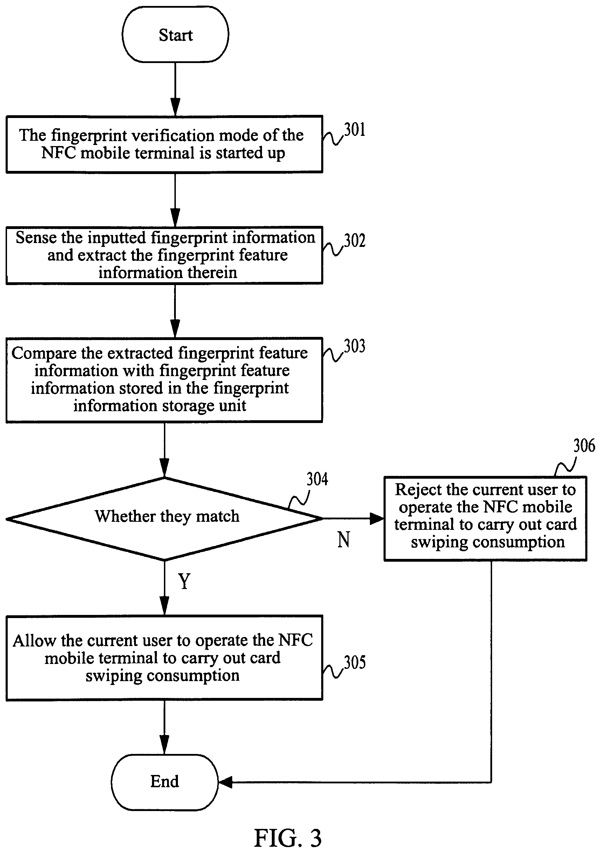

When the above NFC mobile terminal is used to carry out card consumption, the safety can be improved by identifying the fingerprint of the current user and controlling the card swiping behavior according to the identification result, and as shown in FIG. 3, this process can include the following stpes.

In step 301, the fingerprint authentication mode of the NFC mobile terminal is started up.

After the fingerprint authentication mode is started up, the fingerprint authentication system of the NFC mobile terminal provides the fingerprint input interface 106 and can prompt the user to input a fingerprint, the fingerprint sensor 103 is in the preparation state and about to sense the fingerprint inputted by the user on the fingerprint input interface 106, and the fingerprint identification module 105 is also in the preparation state and about to receive the fingerprint feature information transmitted by the fingerprint sensor 103.

In step 302, after the user has input the fingerprint information via the fingerprint input interface 106 provided by the NFC mobile terminal, the fingerprint sensor 103 senses the fingerprint information inputted by the user, extracts the fingerprint feature information about the user from the sensed fingerprint information, and send the extracted fingerprint feature information to the fingerprint identification module 105.

In step 303, the fingerprint identification module 105 compares the extracted fingerprint information with the fingerprint feature information about the authorized user of this NFC mobile terminal stored in the fingerprint information storage unit 104 so as to judge whether there is fingerprint feature information matching the currently extracted fingerprint feature information in the fingerprint information storage unit 104.

In step 304, if after comparison, it is judged that there is fingerprint feature information matching the currently extracted fingerprint feature information in the fingerprint information storage unit 104, then perform step 305, otherwise, perform step 306.

In step 305, the current user is allowed to operate the NFC mobile terminal to carry out card consumption, and it is ended.

In this step, the fingerprint identification module 105 can send the information that the fingerprint authentication is passed to the NFC chip module 101 (i.e. card swiping function processing module), so as to start up the card consumption service function or trigger it to provide the card consumption application service according to this information.

In step 306, the current user is rejected to operate the NFC mobile terminal to carry out card consumption, and it is ended.

In this step, the fingerprint identification module 105 can send the information that the fingerprint authentication is not passed to the NFC chip module 101, so that the card consumption service of the NFC chip module 101 (i.e. card swiping function processing module) is not triggered or this service is closed. It can also be as follows: the fingerprint identification module 105 does not send any information to the NFC chip module 101, so as not to trigger the NFC chip module 101 (i.e. card swiping function processing module), thus this card consumption application processing unit will not provide card consumption application service to the user.

In the above flow, if the compared two pieces of fingerprint feature information are the same, then it can be deemed that the currently inputted fingerprint is the fingerprint of the authorized user. Considering that there may be a certain error during the process of extracting fingerprint feature information by way of the fingerprint identification technology, the similarity between the compared two pieces of fingerprint feature information can also be calculated, and if the calculated similarity is higher than a preset similarity threshold, then it is deemed that the currently inputted fingerprint is the fingerprint of the authorized user.

In step 301 of the above flow, the method for starting up the fingerprint authentication mode of the NFC mobile terminal can includes: the user manually starts up this mode, for example, starting up this mode by triggering the key used to start up the fingerprint authentication mode; it can also be as follows: the NFC mobile terminal automatically starts up this mode, and the fingerprint authentication mode is generally automatically started up when the NFC mobile terminal enters the card emulation mode, for example, when the NFC mobile terminal senses the radio frequency signal of the POS.

After the user has paid by card using the NFC mobile terminal, the NFC mobile terminal leaves the POS (i.e. no radio frequency signal of the POS is detected), and the card swiping function of the NFC mobile terminal can be closed automatically, i.e. the fingerprint authentication mode is exited, at this moment, the fingerprint authentication system is also closed automatically, and the NFC mobile terminal can restore to the conventional communication state.

In addition to applying the fingerprint identification technology in the NFC mobile terminal so as to improve the safety of the card consumption of the NFC mobile terminal by way of the above method, the power supply method for the fingerprint authentication system in the NFC mobile terminal can also be improved.

Since the NFC mobile terminal supports card consumption under two modes of power-up and power-down, the embodiments of the present document provide power supply methods for the fingerprint authentication system regarding the power-up and power-down modes.

As to the power-up mode, in the startup state, the power supply voltage for the NFC chip module 101 in the NFC mobile terminal operating as the card emulation method can be from the battery of the mobile terminal; as to the power-down mode, in the power off state, the power supply voltage for the NFC chip module 101 in the NFC mobile terminal operating as the card emulation method can be from the energy acquired by the radio frequency antenna module 102 when the NFC mobile terminal is used to carry out card swiping (i.e. the energy of the radio frequency signal emitted by the POS).

Further considering that in case of the user not carrying out card swiping, if the fingerprint authentication system is still working, the finger of the user who is holding the mobile terminal at the time may touch the fingerprint input interface and causes the fingerprint sensor 103 to sense the fingerprint and carry out identification processing, and correspondingly, the fingerprint identification module 105 will also carry out processing of comparing fingerprint feature information, as such, it will continuously prompt the user that "authentication is successful" or "authentication is failed", and will also affect the normal use of the NFC mobile terminal by the user and will also consume the electric quantity of the mobile terminal. In order to solve this problem, the embodiments of the present document can use the following methods.

No matter the NFC mobile terminal is in the startup or power off state (i.e. no matter the NFC mobile terminal is in the power-up mode or power-down mode), the power supply voltage of the fingerprint identification system is supplied by the energy acquired by the radio frequency antenna module 102 when the NFC is carrying out card swiping. As such, it can be ensured that as long as the NFC mobile terminal does not approach the POS to consume, the radio frequency antenna module 102 will not be able to acquire energy, and the fingerprint identification system will not operate, and the normal use of the mobile terminal by the user will not be affected; if the user wants to carry out card swiping, then he will make the mobile terminal approach the POS, then the radio frequency antenna module 102 can instantly acquire energy and drive the fingerprint identification system to operate, prompt the user to input the fingerprint information, then starts to verify whether the fingerprint information about the current user is legal, and control the behavior of carrying out card consumption by the user using this NFC mobile terminal according to the legality verification result.

In another embodiment of the present document, the fingerprint information storage unit in the fingerprint authentication system can store the fingerprint of the authorized user, as such, after the fingerprint sensor has sensed the inputted fingerprint, it has to extract the fingerprint feature information from the inputted fingerprint information, also has to extract the fingerprint feature information with respect to the fingerprint stored in the fingerprint information storage unit, then compare the feature information about the inputted fingerprint with the feature information about the fingerprint of the authorized user, and control the card consumption processing of the NFC mobile terminal according to the comparison result.

In summary, the embodiments of the present document introduce the fingerprint identification technology on the basis of NFC mobile terminal, and can effectively prevent card consumption with the NFC mobile terminal by others when the NFC mobile terminal is lost or stolen. At the same time, the embodiments of the present document also provide a new power supply method with respect to the operation of the fingerprint identification system, i.e. the energy captured by the radio frequency module when the NFC mobile terminal is used to carry out card swiping is used to supply power for the fingerprint identification system, which effectively saves the electricity loss brought when the fingerprint identification system of the NFC mobile terminal operates, thereby prolonging the service time of the mobile terminal, and ensuring that it can be smoothly used by the user.

The above description is only the preferred embodiments of the present document and is not intended to limit the present document. The scope of the document is to be determined by the appended claims.

### Industrial Applicability

In the present document, before executing the processing operation of the card emulation application of the NFC mobile terminal, the inputted fingerprint information is acquired, the inputted fingerprint information is compared with the prestored fingerprint information about the authorized user of the NFC mobile terminal so as to judge whether the inputted fingerprint matches the fingerprint information of the authorized user, and the card emulation application of the NFC mobile terminal is allowed to be used for card consumption only when it is judged that they match, therefore, in combination with the fingerprint identification technology, user identity authentication is carried out on the processing operation behavior of the user using the card emulation application of the NFC mobile terminal, thus improving the safety of the card emulation application of the NFC mobile terminal.

## Claims

1. A method for implementing card emulation application of a near field communication (NFC) mobile terminal, comprising:
prestoring fingerprint information about an authorized user of the NFC mobile terminal;
acquiring inputted fingerprint information and comparing the inputted fingerprint information with the prestored fingerprint information about the authorized user of the NFC mobile terminal (301, 302, 303); and
if the inputted fingerprint information matches the fingerprint information about the authorized user, then allowing to execute a processing operation of the card emulation application of the NFC mobile terminal (305);
if the inputted fingerprint information fails to match the fingerprint information about the authorized user, then rejecting to execute the processing operation of the card emulation application of the NFC mobile terminal (306); **characterized by**,
before the step of acquiring the inputted fingerprint information, the method further comprises: starting up a fingerprint identification mode of the NFC mobile terminal according to a detected radio frequency signal emitted by a card reading device, and if receiving the radio frequency signal emitted by the card reading device, supply power to a fingerprint authentication system of the NFC mobile terminal with the energy of the received radio frequency signal; and
after the step of starting up the fingerprint identification mode of the NFC mobile terminal, the method further comprises: if the NFC mobile terminal fails to detect the radio frequency signal of the card reading device, closing the fingerprint identification mode of the NFC mobile terminal.

2. The method as claimed in claim 1, wherein
in the step of comparing the inputted fingerprint information with the prestored fingerprint information about the authorized user of the NFC mobile terminal, the fingerprint information about the authorized user is fingerprint feature information about the authorized user;
after the step of acquiring the inputted fingerprint information, the method further comprises: extracting the fingerprint feature information from the inputted fingerprint information;
the step of comparing the inputted fingerprint information with the prestored fingerprint information about the authorized user of the NFC mobile terminal comprises: comparing the fingerprint feature information extracted from the inputted fingerprint information with the fingerprint feature information about the authorized user.

3. The method as claimed in claim 2, wherein in the step of comparing the inputted fingerprint information with the prestored fingerprint information about the authorized user of the NFC mobile terminal, if the following condition is met, then the inputted fingerprint information matches the fingerprint information about the authorized user:
the fingerprint feature information extracted from the inputted fingerprint information is consistent with the fingerprint feature information about the authorized user; or
a similarity between the fingerprint feature information extracted from the inputted fingerprint information and the fingerprint feature information about the authorized user is greater than a preset threshold.

4. The method as claimed in claim 2, wherein the step of prestoring fingerprint information about the authorized user of the NFC mobile terminal comprises:
receiving a command inputted by a user and comparing that command with a command preset by the authorized user; if the inputted command is consistent with the command preset by the authorized user, prompt the user to input a fingerprint; and acquiring the fingerprint information inputted by the user, extracting the fingerprint feature information therefrom, and storing the extracted fingerprint feature information.

5. A near field communication (NFC) mobile terminal, comprising:
an NFC card swiping function processing module, and
a fingerprint authentication system configured to: prestoring fingerprint information about an authorized user of the NFC mobile terminal; and acquiring inputted fingerprint information and
comparing the inputted fingerprint information with the prestored fingerprint information about the authorized user of the NFC mobile terminal; if the inputted fingerprint information matches the fingerprint information about the authorized user, then send to the NFC card swiping function processing module an instruction that a processing operation of a card emulation application of the NFC mobile terminal is allowed to execute; and if the inputted fingerprint information fails to match the fingerprint information about the authorized user, then send to the NFC card swiping function processing module an instruction that the processing operation of the card emulation application of the NFC mobile terminal is rejected to execute; and
the NFC card swiping function processing module configured to: if receiving the instruction from the fingerprint authentication system that the processing operation of the card emulation application of the NFC mobile terminal is allowed to execute, then execute the processing operation of the card emulation application of the NFC mobile terminal; and if receiving from the fingerprint authentication system the instruction that the processing operation of the card emulation application of the NFC mobile terminal is rejected to execute, then reject to execute the processing operation of the card emulation application of the NFC mobile terminal; **characterized by**,
the fingerprint authentication system is further configured to: start up a fingerprint identification mode if it detects a radio frequency signal emitted by a card reading device; and if the NFC mobile terminal fails to detect the radio frequency signal of the card reading device, close the fingerprint identification mode; and
the NFC mobile terminal further comprising:
a radio frequency antenna module (102) configured to: when receiving the radio frequency signal emitted by the card reading device, supply power to the fingerprint authentication system with energy of the received radio frequency signal.

6. The NFC mobile terminal as claimed in claim 5, wherein the fingerprint authentication system comprises:
a fingerprint information storage unit (104) configured to prestore the fingerprint feature information about the authorized user of the NFC mobile terminal;
a fingerprint sensor (103) configured to sense the inputted fingerprint information and extract the fingerprint feature information from the inputted fingerprint information; and
a fingerprint identification module (105) configured to: compare the fingerprint feature information extracted by the fingerprint sensor with the fingerprint information stored by the fingerprint information storage unit, if the inputted fingerprint information matches the fingerprint information about the authorized user, then send the instruction that the processing operation of the card emulation application of the NFC mobile terminal is allowed to execute to the NFC card swiping function processing module; and if the inputted fingerprint information fails to match the fingerprint information about the authorized user, then send the instruction that the processing operation of the card emulation application of the NFC mobile terminal is rejected to execute to the NFC card swiping function processing module.

7. The NFC mobile terminal as claimed in claim 6, wherein the fingerprint identification module (105) is configured to compare whether the inputted fingerprint information matches the fingerprint information about the authorized user according to the following:
the fingerprint identification module (105) compares whether the fingerprint feature information extracted from the inputted fingerprint information is consistent with the fingerprint information about the authorized user, if yes, then they match; or
the fingerprint identification module (105) compares whether a similarity between the fingerprint feature information extracted from the inputted fingerprint information and the fingerprint information about the authorized user is greater than a preset threshold, if yes, then they match.

8. The NFC mobile terminal as claimed in claim 6, wherein the fingerprint authentication system is configured to prestore the fingerprint information about the authorized user of the NFC mobile terminal according to the following manner: receive a command inputted by a user and compare that command with a command preset by the authorized user; when the inputted command is consistent with the command preset by the authorized user, prompt the user to input a fingerprint; and acquire the fingerprint information inputted by the user, extract the fingerprint feature information therefrom, and store the extracted fingerprint feature information.

9. A near field communication (NFC) mobile terminal, comprising:
an NFC card swiping function processing module,
a fingerprint authentication system configured to: prestore fingerprint information about an authorized user of the NFC mobile terminal; acquire inputted fingerprint information, compare the inputted fingerprint information with the prestored fingerprint information about the authorized user of the NFC mobile terminal, and send a comparison result to an NFC card swiping function processing module; and
the NFC card swiping function processing module configured to:
if the comparison result of the fingerprint authentication system is that the inputted fingerprint information matches the fingerprint information about the authorized user, then execute a processing operation of a card emulation application of the NFC mobile terminal; and if the comparison result of the fingerprint authentication system is that the inputted fingerprint information fails to match the fingerprint information about the authorized user, then reject to execute the processing operation of the card emulation application of the NFC mobile terminal; **characterized by**,
the fingerprint authentication system is further configured to: start up a fingerprint identification mode if it detects radio frequency signal emitted by a card reading device; and if the NFC mobile terminal fails to detect the radio frequency signal of the card reading device, close the fingerprint identification mode; and
the NFC mobile terminal further comprising:
a radio frequency antenna module (102) configured to: when receiving the radio frequency signal emitted by the card reading device, supply power to the fingerprint authentication system with the energy of the received radio frequency signal.

10. The NFC mobile terminal as claimed in claim 9, wherein the fingerprint authentication system comprises:
a fingerprint information storage unit (104) configured to prestore the fingerprint feature information about the authorized user of the NFC mobile terminal;
a fingerprint sensor (103) configured to sense the inputted fingerprint information and extract the fingerprint feature information from the inputted fingerprint information; and
a fingerprint identification module (105) configured to: compare the fingerprint feature information extracted by the finger sensor with the fingerprint information stored by the fingerprint information storage unit and send the comparison result to the NFC card swiping function processing module.

## Patentansprüche

1. Verfahren zum Implementieren einer Kartenemulationsanwendung eines mobilen Nahfeldkommunikation(NFC)-Endgeräts, das Folgendes umfasst:
vorab Speichern von Fingerabdruckinformationen über einen autorisierten Benutzer des mobilen NFC-Endgeräts;
Gewinnen von eingegebenen Fingerabdruckinformationen und Vergleichen der eingegebenen Fingerabdruckinformationen mit den vorab gespeicherten Fingerabdruckinformationen über den autorisierten Benutzer des mobilen NFC-Endgeräts (301, 302, 303) und,
falls die eingegebenen Fingerabdruckinformationen den Fingerabdruckinformationen über den autorisierten Benutzer entsprechen, dann Erlauben, eine Verarbeitungsoperation der Kartenemulationsanwendung des mobilen NFC-Endgeräts auszuführen (305);
falls die eingegebenen Fingerabdruckinformationen nicht den Fingerabdruckinformationen über den autorisierten Benutzer entsprechen, dann Ablehnen, die Verarbeitungsoperation der Kartenemulationsanwendung des mobilen NFC-Endgeräts auszuführen (306); **dadurch gekennzeichnet,**
**dass**
das Verfahren vor dem Schritt des Gewinnens der eingegebenen Fingerabdruckinformationen ferner Folgendes umfasst: Starten eines Fingerabdruckidentifikationsmodus des mobilen NFC-Endgeräts gemäß einem detektierten Hochfrequenzsignal, das durch eine Kartenleseeinrichtung emittiert wird, und,
falls das Hochfrequenzsignal, das durch die Kartenleseeinrichtung emittiert wird, empfangen wird, Zuführen von Strom zu einem Fingerabdruckauthentifizierungssystem des mobilen NFC-Endgeräts mit der Energie des empfangenen Hochfrequenzsignals und
das Verfahren nach dem Schritt des Startens des Fingerabdruckidentifikationsmodus des mobilen NFC-Endgeräts ferner Folgendes umfasst:
falls das mobile NFC-Endgerät daran scheitert, das Hochfrequenzsignal der Kartenleseeinrichtung zu detektieren, Schließen des Fingerabdruckidentifikationsmodus des mobilen NFC-Endgeräts.

2. Verfahren nach Anspruch 1, wobei,
im Schritt des Vergleichens der eingegebenen Fingerabdruckinformationen mit den vorab gespeicherten Fingerabdruckinformationen über den autorisierten Benutzer des mobilen NFC-Endgeräts, die Fingerabdruckinformationen über den autorisierten Benutzer Fingerabdruckmerkmalsinformationen über den autorisierten Benutzer sind;
das Verfahren nach dem Schritt des Gewinnens der eingegebenen Fingerabdruckinformationen ferner Folgendes umfasst: Extrahieren der Fingerabdruckmerkmalsinformationen aus den eingegebenen Fingerabdruckinformationen;
der Schritt des Vergleichens der eingegebenen Fingerabdruckinformationen mit den vorab gespeicherten Fingerabdruckinformationen über den autorisierten Benutzer des mobilen NFC-Endgeräts Folgendes umfasst:
Vergleichen der Fingerabdruckmerkmalsinformationen, die aus den eingegebenen Fingerabdruckinformationen extrahiert werden, mit den Fingerabdruckmerkmalsinformationen über den autorisierten Benutzer.

3. Verfahren nach Anspruch 2, wobei, im Schritt des Vergleichens der eingegebenen Fingerabdruckinformationen mit den vorab gespeicherten Fingerabdruckinformationen über den autorisierten Benutzer des mobilen NFC-Endgeräts, falls die folgende Bedingung erfüllt ist, dann entsprechen die eingegebenen Fingerabdruckinformationen den Fingerabdruckinformationen über den autorisierten Benutzer:
die Fingerabdruckmerkmalsinformationen, die aus den eingegebenen Fingerabdruckinformationen extrahiert werden, stimmen mit den Fingerabdruckmerkmalsinformationen über den autorisierten Benutzer überein
oder
eine Ähnlichkeit zwischen den Fingerabdruckmerkmalsinformationen, die aus den eingegebenen Fingerabdruckinformationen extrahiert werden, und den Fingerabdruckmerkmalsinformationen über den autorisierten Benutzer ist größer als eine voreingestellte Schwelle.

4. Verfahren nach Anspruch 2, wobei der Schritt des vorab Speicherns von Fingerabdruckinformationen über den autorisierten Benutzer des mobilen NFC-Endgeräts Folgendes umfasst:
Empfangen eines Befehls, der durch einen Benutzer eingegeben wird, und Vergleichen dieses Befehls mit einem Befehl, der durch den autorisierten Benutzer voreingestellt wird;
falls der eingegebene Befehl mit dem Befehl, der durch den autorisierten Benutzer voreingestellt wird, übereinstimmt, Auffordern des Benutzers, einen Fingerabdruck einzugeben; und
Gewinnen der Fingerabdruckinformationen, die durch den Benutzer eingegeben werden,
Extrahieren der Fingerabdruckmerkmalsinformationen davon und Speichern der extrahierten Fingerabdruckmerkmalsinformationen.

5. Mobiles Nahfeldkommunikation(NFC)-Endgerät, das Folgendes umfasst:
ein NFC-Kartendurchzugsfunktion-Verarbeitungsmodul und ein Fingerabdruckauthentifizierungssystem, das konfiguriert ist zum vorab Speichern von Fingerabdruckinformationen über einen autorisierten Benutzer des mobilen NFC-Endgeräts und Gewinnen von eingegebenen Fingerabdruckinformationen und Vergleichen der eingegebenen Fingerabdruckinformationen mit den vorab gespeicherten Fingerabdruckinformationen über den autorisierten Benutzer des mobilen NFC-Endgeräts; falls die eingegebenen Fingerabdruckinformationen den Fingerabdruckinformationen über den autorisierten Benutzer entsprechen, dann Senden, zum NFC-Kartendurchzugsfunktion-Verarbeitungsmodul, einer Anweisung, dass erlaubt ist, eine Verarbeitungsoperation einer Kartenemulationsanwendung des mobilen NFC-Endgeräts auszuführen; und, falls die eingegebenen Fingerabdruckinformationen nicht den Fingerabdruckinformationen über den autorisierten Benutzer entsprechen, dann Senden, zum NFC-Kartendurchzugsfunktion-Verarbeitungsmodul, einer Anweisung, dass abgelehnt wird, die Verarbeitungsoperation der Kartenemulationsanwendung des mobilen NFC-Endgeräts auszuführen; und
das NFC-Kartendurchzugsfunktion-Verarbeitungsmodul konfiguriert ist zum, falls die Anweisung vom Fingerabdruckauthentifizierungssystem empfangen wird, dass erlaubt ist, die Verarbeitungsoperation der Kartenemulationsanwendung des mobilen NFC-Endgeräts auszuführen, dann Ausführen der Verarbeitungsoperation der Kartenemulationsanwendung des mobilen NFC-Endgeräts; und, falls vom Fingerabdruckauthentifizierungssystem die Anweisung empfangen wird, dass abgelehnt wird, die Verarbeitungsoperation der Kartenemulationsanwendung des mobilen NFC-Endgeräts auszuführen, dann Ablehnen, die Verarbeitungsoperation der Kartenemulationsanwendung des mobilen NFC-Endgeräts auszuführen; **dadurch gekennzeichnet, dass**
das Fingerabdruckauthentifizierungssystem ferner konfiguriert ist zum Starten eines Fingerabdruckidentifikationsmodus, falls es ein Hochfrequenzsignal detektiert, das durch eine Kartenleseeinrichtung emittiert wird; und, falls das mobile NFC-Endgerät daran scheitert, das Hochfrequenzsignal der Kartenleseeinrichtung zu detektieren, Schließen des Fingerabdruckidentifikationsmodus; und
das mobile NFC-Endgerät ferner Folgendes umfasst:
ein Hochfrequenzantennenmodul (102), das konfiguriert ist zum, wenn das durch die Kartenleseeinrichtung emittierte Hochfrequenzsignal empfangen wird, Zuführen von Strom zum Fingerabdruckauthentifizierungssystem mit Energie des empfangenen Hochfrequenzsignals.

6. Mobiles NFC-Endgerät nach Anspruch 5, wobei das Fingerabdruckauthentifizierungssystem Folgendes umfasst:
eine Fingerabdruckinformationen-Speichereinheit (104), die konfiguriert ist zum vorab Speichern der Fingerabdruckmerkmalsinformationen über den autorisierten Benutzer des mobilen NFC-Endgeräts;
einen Fingerabdrucksensor (103), der konfiguriert ist zum Erfassen der eingegebenen Fingerabdruckinformationen und Extrahieren der Fingerabdruckmerkmalsinformationen aus den eingegebenen Fingerabdruckinformationen; und
ein Fingerabdruckidentifikationsmodul (105), das konfiguriert ist zum Vergleichen der Fingerabdruckmerkmalsinformationen, die durch den Fingerabdrucksensor extrahiert werden, mit den Fingerabdruckinformationen, die durch die Fingerabdruckinformationen-Speichereinheit gespeichert werden, falls die eingegebenen Fingerabdruckinformationen den Fingerabdruckinformationen über den autorisierten Benutzer entsprechen, dann Senden der Anweisung, dass erlaubt ist, die Verarbeitungsoperation der Kartenemulationsanwendung des mobilen NFC-Endgeräts auszuführen, zum NFC-Kartendurchzugsfunktion-Verarbeitungsmodul;
und, falls die eingegebenen Fingerabdruckinformationen nicht den Fingerabdruckinformationen über den autorisierten Benutzer entsprechen, dann Senden der Anweisung, dass abgelehnt wird, die Verarbeitungsoperation der Kartenemulationsanwendung des mobilen NFC-Endgeräts auszuführen, zum NFC-Kartendurchzugsfunktion-Verarbeitungsmodul.

7. Mobiles NFC-Endgerät nach Anspruch 6, wobei das Fingerabdruckidentifikationsmodul (105) konfiguriert ist zum Vergleichen, ob die eingegebenen Fingerabdruckinformationen den Fingerabdruckinformationen über den autorisierten Benutzer entsprechen, gemäß Folgendem:
das Fingerabdruckidentifikationsmodul (105) vergleicht, ob die Fingerabdruckmerkmalsinformationen, die aus den eingegebenen Fingerabdruckinformationen extrahiert werden, mit den Fingerabdruckinformationen über den autorisierten Benutzer übereinstimmen, falls ja, dann entsprechen sie sich; oder
das Fingerabdruckidentifikationsmodul (105) vergleicht, ob eine Ähnlichkeit zwischen den Fingerabdruckmerkmalsinformationen, die aus den eingegebenen Fingerabdruckinformationen extrahiert werden, und den Fingerabdruckinformationen über den autorisierten Benutzer größer als eine voreingestellte Schwelle ist, falls ja, dann entsprechen sie sich.

8. Mobiles NFC-Endgerät nach Anspruch 6, wobei das Fingerabdruckauthentifizierungssystem konfiguriert ist zum vorab Speichern der Fingerabdruckinformationen über den autorisierten Benutzer des mobilen NFC-Endgeräts gemäß der folgenden Art und Weise: Empfangen eines Befehls, der durch einen Benutzer eingegeben wird, und Vergleichen dieses Befehls mit einem Befehl, der durch den autorisierten Benutzer voreingestellt wird; wenn der eingegebene Befehl mit dem Befehl, der durch den autorisierten Benutzer voreingestellt wird, übereinstimmt, Auffordern des Benutzers, einen Fingerabdruck einzugeben; und Gewinnen der Fingerabdruckinformationen, die durch den Benutzer eingegeben werden, Extrahieren der Fingerabdruckmerkmalsinformationen davon und Speichern der extrahierten Fingerabdruckmerkmalsinformationen.

9. Mobiles Nahfeldkommunikation(NFC)-Endgerät, das Folgendes umfasst:
ein NFC-Kartendurchzugsfunktion-Verarbeitungsmodul, ein Fingerabdruckauthentifizierungssystem, das konfiguriert ist zum vorab Speichern von Fingerabdruckinformationen über einen autorisierten Benutzer des mobilen NFC-Endgeräts; Gewinnen von eingegebenen Fingerabdruckinformationen, Vergleichen der eingegebenen Fingerabdruckinformationen mit den vorab gespeicherten Fingerabdruckinformationen über den autorisierten Benutzer des mobilen NFC-Endgeräts und Senden eines Vergleichsergebnisses zu einem NFC-Kartendurchzugsfunktion-Verarbeitungsmodul; und
das NFC-Kartendurchzugsfunktion-Verarbeitungsmodul konfiguriert ist zum:
falls das Vergleichsergebnis des Fingerabdruckauthentifizierungssystems ist, dass die eingegebenen Fingerabdruckinformationen den Fingerabdruckinformationen über den autorisierten Benutzer entsprechen, dann Ausführen einer Verarbeitungsoperation einer Kartenemulationsanwendung des mobilen NFC-Endgeräts;
und, falls das Vergleichsergebnis des Fingerabdruckauthentifizierungssystems ist, dass die eingegebenen Fingerabdruckinformationen nicht den Fingerabdruckinformationen über den autorisierten Benutzer entsprechen, dann Ablehnen, die Verarbeitungsoperation der Kartenemulationsanwendung des mobilen NFC-Endgeräts auszuführen; **dadurch gekennzeichnet, dass**
das Fingerabdruckauthentifizierungssystem ferner konfiguriert ist zum Starten eines Fingerabdruckidentifikationsmodus, falls es ein Hochfrequenzsignal detektiert, das durch eine Kartenleseeinrichtung emittiert wird; und
falls das mobile NFC-Endgerät daran scheitert, das Hochfrequenzsignal der Kartenleseeinrichtung zu detektieren, Schließen des Fingerabdruckidentifikationsmodus; und
das mobile NFC-Endgerät ferner Folgendes umfasst:
ein Hochfrequenzantennenmodul (102), das konfiguriert ist zum, wenn das durch die Kartenleseeinrichtung emittierte Hochfrequenzsignal empfangen wird, Zuführen von Strom zum Fingerabdruckauthentifizierungssystem mit der Energie des empfangenen Hochfrequenzsignals.

10. Mobiles NFC-Endgerät nach Anspruch 9, wobei das Fingerabdruckauthentifizierungssystem Folgendes umfasst:
eine Fingerabdruckinformationen-Speichereinheit (104), die konfiguriert ist zum vorab Speichern der Fingerabdruckmerkmalsinformationen über den autorisierten Benutzer des mobilen NFC-Endgeräts;
einen Fingerabdrucksensor (103), der konfiguriert ist zum Erfassen der eingegebenen Fingerabdruckinformationen und Extrahieren der Fingerabdruckmerkmalsinformationen aus den eingegebenen Fingerabdruckinformationen; und
ein Fingerabdruckidentifikationsmodul (105), das konfiguriert ist zum Vergleichen der Fingerabdruckmerkmalsinformationen, die durch den Fingersensor extrahiert werden, mit den Fingerabdruckinformationen, die durch die Fingerabdruckinformationen-Speichereinheit gespeichert werden, und Senden des Vergleichsergebnisses zum NFC-Kartendurchzugsfunktion-Verarbeitungsmodul.

## Revendications

1. Procédé permettant de mettre en oeuvre une application d'émulation de carte d'un terminal mobile de communication en champ proche (NFC), comprenant les étapes suivantes :
pré-stocker des informations d'empreintes concernant un utilisateur autorisé du terminal mobile NFC;
acquérir des informations d'empreintes entrées et comparer les informations d'empreintes entrées avec les informations d'empreintes pré-stockées concernant l'utilisateur autorisé du terminal mobile NFC (301, 302, 303) ; et
si les informations d'empreintes entrées correspondent aux informations d'empreintes concernant l'utilisateur autorisé, alors autoriser l'exécution d'une opération de traitement de l'application d'émulation de carte du terminal mobile NFC (305);
si les informations d'empreintes entrées ne correspondent pas aux informations d'empreintes concernant l'utilisateur autorisé, alors rejeter l'exécution de l'opération de traitement de l'application d'émulation de carte du terminal mobile NFC (306); **caractérisé par**,
avant l'étape consistant à acquérir les informations d'empreintes entrées, le procédé comprend en outre: démarrer un mode d'identification d'empreintes du terminal mobile NFC selon un signal radiofréquence détecté émis par un dispositif de lecture de carte, et si le signal radiofréquence émis par le dispositif de lecture de carte est reçu, alimenter un système d'authentification d'empreintes du terminal mobile NFC avec l'énergie du signal radiofréquence reçu; et
après l'étape consistant à démarrer le mode d'identification d'empreintes du terminal mobile NFC, le procédé comprend en outre: si le terminal mobile NFC ne détecte pas le signal radiofréquence du dispositif de lecture de carte, fermer le mode d'identification d'empreintes du terminal mobile NFC.

2. Procédé selon la revendication 1, dans lequel:
dans l'étape consistant à comparer les informations d'empreintes entrées avec les informations d'empreintes pré-stockées concernant l'utilisateur autorisé du terminal mobile NFC, les informations d'empreintes concernant l'utilisateur autorisé sont des informations de caractéristiques d'empreintes concernant l'utilisateur autorisé;
après l'étape consistant à acquérir les informations d'empreintes entrées, le procédé comprend en outre: extraire les informations de caractéristiques d'empreintes à partir des informations d'empreintes entrées;
l'étape consistant à comparer les informations d'empreintes entrées avec les informations d'empreintes pré-stockées concernant l'utilisateur autorisé du terminal mobile NFC comprend: comparer les informations de caractéristiques d'empreintes extraites à partir des informations d'empreintes entrées avec les informations de caractéristiques d'empreintes concernant l'utilisateur autorisé.

3. Procédé selon la revendication 2 dans lequel, dans l'étape consistant à comparer les informations d'empreintes entrées avec les informations d'empreintes pré-stockées concernant l'utilisateur autorisé du terminal mobile NFC, si la condition suivante est rencontrée, alors les informations d'empreintes entrées correspondent aux informations d'empreintes concernant l'utilisateur autorisé;
les informations de caractéristiques d'empreintes extraites à partir des informations d'empreintes entrées sont concordantes avec les informations de caractéristiques d'empreintes concernant l'utilisateur autorisé; ou
une similarité entre les informations de caractéristiques d'empreintes extraites à partir des informations d'empreintes entrées et les informations de caractéristiques d'empreintes concernant l'utilisateur autorisé est supérieure à un seuil prédéfini.

4. Procédé selon la revendication 2, dans lequel l'étape consistant à pré-stocker des informations d'empreintes concernant l'utilisateur autorisé du terminal mobile NFC comprend:
recevoir une commande entrée par un utilisateur et comparer cette commande avec une commande prédéfinie par l'utilisateur autorisé;
si la commande entrée est concordante avec la commande prédéfinie par l'utilisateur autorisé, inviter l'utilisateur à entrer une empreinte; et
acquérir les informations d'empreintes entrées par l'utilisateur, en extraire les informations de caractéristiques d'empreintes, et stocker les informations de caractéristiques d'empreintes extraites.

5. Terminal mobile de communication en champ proche (NFC), comprenant:
un module de traitement de fonction d'insertion de carte NFC, et un système d'authentification d'empreintes configuré pour: pré-stocker des informations d'empreintes concernant un utilisateur autorisé du terminal mobile NFC; et acquérir des informations d'empreintes entrées et comparer les informations d'empreintes entrées avec les informations d'empreintes pré-stockées concernant l'utilisateur autorisé du terminal mobile NFC; si les informations d'empreintes entrées correspondent aux informations d'empreintes concernant l'utilisateur autorisé, alors envoyer au module de traitement de fonction d'insertion de carte NFC une instruction que l'exécution d'une opération de traitement d'une application d'émulation de carte du terminal mobile NFC est autorisée;
et si les informations d'empreintes entrées ne correspondent pas aux informations d'empreintes concernant l'utilisateur autorisé, alors envoyer au module de traitement de fonction d'insertion de carte NFC une instruction que l'exécution de l'opération de traitement de l'application d'émulation de carte du terminal mobile NFC est rejetée; et le module de traitement de fonction d'insertion de carte NFC configuré pour: si l'instruction est reçue à partir du système d'authentification d'empreintes que l'exécution de l'opération de traitement de l'application d'émulation de carte du terminal mobile NFC est autorisée, alors exécuter l'opération de traitement de l'application d'émulation de carte du terminal mobile NFC; et si l'instruction est reçue à partir du système d'authentification d'empreintes que l'exécution de l'opération de traitement de l'application d'émulation de carte du terminal mobile NFC est rejetée, alors rejeter l'exécution de l'opération de traitement de l'application d'émulation de carte du terminal mobile NFC; **caractérisé par**,
le système d'authentification d'empreintes est en outre configuré pour:
démarrer un mode d'identification d'empreintes s'il détecte un signal radiofréquence émis par un dispositif de lecture de carte; et si le terminal mobile NFC ne détecte pas le signal radiofréquence du dispositif de lecture de carte, fermer le mode d'identification d'empreintes; et le terminal mobile NFC comprenant en outre:
un module d'antenne radiofréquence (102) configuré pour: lors de la réception du signal radiofréquence émis par le dispositif de lecture de carte, alimenter le système d'authentification d'empreintes avec l'énergie du signal radiofréquence reçu.

6. Terminal mobile NFC selon la revendication 5, dans lequel le système d'authentification d'empreintes comprend:
une unité de stockage d'informations d'empreintes (104) configurée pour pré-stocker les informations de caractéristiques d'empreintes concernant l'utilisateur autorisé du terminal mobile NFC;
un capteur d'empreintes (103) configuré pour détecter les informations d'empreintes entrées et extraire les informations de caractéristiques d'empreintes à partir des informations d'empreintes entrées; et
un module d'identification d'empreintes (105) configuré pour: comparer les informations de caractéristiques d'empreintes extraites par le capteur d'empreintes avec les informations d'empreintes stockées par l'unité de stockage d'informations d'empreintes; si les informations d'empreintes entrées correspondent aux informations d'empreintes concernant l'utilisateur autorisé, alors envoyer l'instruction que l'exécution de l'opération de traitement de l'application d'émulation de carte du terminal mobile NFC est autorisée au module de traitement de fonction d'insertion de carte NFC; et si les informations d'empreintes entrées ne correspondent pas aux informations d'empreintes concernant l'utilisateur autorisé, alors envoyer l'instruction que l'exécution de l'opération de traitement de l'application d'émulation de carte du terminal mobile NFC est rejetée au module de traitement de fonction d'insertion de carte NFC.

7. Terminal mobile NFC selon la revendication 6, dans lequel le module d'identification d'empreintes (105) est configuré pour comparer si les informations d'empreintes entrées correspondent aux informations d'empreintes concernant l'utilisateur autorisé selon les actions suivantes:
le module d'identification d'empreintes (105) compare si les informations de caractéristiques d'empreintes extraites à partir des informations d'empreintes entrées sont concordantes avec les informations d'empreintes concernant l'utilisateur autorisé; si tel est le cas, alors elles correspondent; ou
le module d'identification d'empreintes (105) compare si une similarité entre les informations de caractéristiques d'empreintes extraites à partir des informations d'empreintes entrées et les informations d'empreintes concernant l'utilisateur autorisé est supérieure à un seuil prédéfini; si tel est le cas, alors elles correspondent.

8. Terminal mobile NFC selon la revendication 6, dans lequel le système d'authentification d'empreintes est configuré pour pré-stocker les informations d'empreintes concernant l'utilisateur autorisé du terminal mobile NFC selon les actions suivantes: recevoir une commande entrée par un utilisateur et comparer cette commande avec une commande prédéfinie par l'utilisateur autorisé; lorsque la commande entrée est concordante avec la commande prédéfinie par l'utilisateur autorisé, inviter l'utilisateur à entrer une empreinte; et acquérir les informations d'empreintes entrées par l'utilisateur, en extraire les informations de caractéristiques d'empreintes, et stocker les informations de caractéristiques d'empreintes extraites.

9. Terminal mobile de communication en champ proche (NFC), comprenant:
un module de traitement de fonction d'insertion de carte NFC,
un système d'authentification d'empreintes configuré pour: pré-stocker des informations d'empreintes concernant un utilisateur autorisé du terminal mobile NFC; acquérir des informations d'empreintes entrées,
comparer les informations d'empreintes entrées avec les informations d'empreintes pré-stockées concernant l'utilisateur autorisé du terminal mobile NFC, et envoyer un résultat de comparaison à un module de traitement de fonction d'insertion de carte NFC; et
le module de traitement de fonction d'insertion de carte NFC configuré pour:
si le résultat de comparaison du système d'authentification d'empreintes est que les informations d'empreintes entrées correspondent aux informations d'empreintes concernant l'utilisateur autorisé, alors exécuter une opération de traitement d'une application d'émulation de carte du terminal mobile NFC; et
si le résultat de comparaison du système d'authentification d'empreintes est que les informations d'empreintes entrées ne correspondent pas aux informations d'empreintes concernant l'utilisateur autorisé, alors rejeter l'exécution de l'opération de traitement de l'application d'émulation de carte du terminal mobile NFC; **caractérisé par**,
le système d'authentification d'empreintes est en outre configuré pour:
démarrer un mode d'identification d'empreintes s'il détecte un signal radiofréquence émis par un dispositif de lecture de carte; et si le terminal mobile NFC ne détecte pas le signal radiofréquence du dispositif de lecture de carte, fermer le mode d'identification d'empreintes; et
le terminal mobile NFC comprenant en outre:
un module d'antenne radiofréquence (102) configuré pour: lors de la réception du signal radiofréquence émis par le dispositif de lecture de carte, alimenter le système d'authentification d'empreintes avec l'énergie du signal radiofréquence reçu.

10. Terminal mobile NFC selon la revendication 9, dans lequel le système d'authentification d'empreintes comprend:
une unité de stockage d'informations d'empreintes (104) configurée pour pré-stocker les informations de caractéristiques d'empreintes concernant l'utilisateur autorisé du terminal mobile NFC;
un capteur d'empreintes (103) configuré pour détecter les informations d'empreintes entrées et extraire les informations de caractéristiques d'empreintes à partir des informations d'empreintes entrées; et
un module d'identification d'empreintes (105) configuré pour: comparer les informations de caractéristiques d'empreintes extraites par le capteur de doigts avec les informations d'empreintes stockées par l'unité de stockage d'informations d'empreintes et envoyer le résultat de comparaison au module de traitement de fonction d'insertion de carte NFC.
